# EUROPÄISCHE PATENTSCHRIFT

(11) **EP 1 741 591 B1**
(45) Veröffentlichungstag und Bekanntmachung des Hinweises auf die Patenterteilung: **14.10.2009**
(21) Anmeldenummer: 05106151.3
(22) Anmeldetag: 06.07.2005
(51) Int. Cl.: B60W 40/04

(54) **Verfahren zur Vorhersage von Fahrtsituationen in einem Kraftfahrzeug**
Method for predicting driving situations in a vehicle
Procédé pour prédire des situations de conduite dans un véhicule

(43) Veröffentlichungstag der Anmeldung: 10.01.2007
(73) Patentinhaber: Ford Global Technologies, LLC, Dearborn, MI 48126 (US)
(72) Erfinder: Eifert, Mark, 80809 München (DE); Hochkirchen, Thomas, 6291 AJ Vaals (NL); Rienks, Maurice, 6002 CT Weert (NL); Börger, Marcus, 52064, Aachen (DE); Ress, Christian, 52078, Aachen (DE); Etemad, Aria, 52074, Aachen (DE)
(74) Vertreter: Dörfler, Thomas

(56) Entgegenhaltungen:
- EP-A- 1 256 476
- US-A- 5 521 823
- US-B1- 6 740 002
- YUAN ZHU ET AL: "A four-step method to design an energy management strategy for hybrid vehicles" AMERICAN CONTROL CONFERENCE, 2004. PROCEEDINGS OF THE 2004 BOSTON, MA, USA JUNE 30-JULY 2, 2004, PISCATAWAY, NJ, USA,IEEE, Bd. 1, 30. Juni 2004 (2004-06-30), Seiten 156-161, XP010761034 ISBN: 0-7803-8335-4

## Beschreibung

Die vorliegende Erfindung betrifft ein Verfahren Vorhersage von Fahrtsituationen. Insbesondere betrifft die Erfindung ein Verfahren, mittels dessen. eine Vorhersage von Fahrtsituationen in definierten Kategorien möglich ist, so dass die erhaltene Information für unterschiedliche Anwendungen, z.B. zur Steuerung eines Batterieaufladezyklus oder auch eines Partikelfilterregenerationszyklus, einsetzbar ist.

Im Stand der Technik sind diverse Verfahren bekannt, um den Betriebsmodus insbesondere von Hybridfahrzeugen in Abhängigkeit u.a. von streckenspezifischen Parametern zu steuern.

Beispielsweise ist aus der EP 1 256 476 A2 ein Energiemanagement-System für ein Elektro- oder Hybridfahrzeug bekannt, in welchem anwendungsspezifische Informationen eines Navigationssystems sowohl über die aktuelle Fahrzeugposition als auch über die weiteren Fahrtbedingungen in definierter Weise abgefragt und davon abhängig unterschiedliche Steuerstrategien (z.B. hinsichtlich des Betriebs der Batterie) durchgeführt werden. Die gezielte anwendungsspezifische Abfrage der Routeninformationen hat jedoch den Nachteil, dass eine Verwendung dieser Informationen für andere Systeme nicht bzw. nur unter zusätzlichem Aufwand möglich ist.

Aus der US 6 249 723 B1 ist ein Verfahren zum Betrieb eines Hybridfahrzeugs bekannt, bei dem navigationsgestützt das Ausmaß des jeweiligen Einsatzes von Verbrennungsmotor bzw. Elektromotor in Abhängigkeit von einer vom Fahrer vorgegebenen gesamten Fahrtdauer bestimmt wird und bei dem ferner Batterieladezyklen unter Berücksichtigung der jeweils zu erwartenden Bergauf- bzw. Bergabfahrten gewählt werden. Aus der DE 101 28 758 A1 sind ein Verfahren und eine Einrichtung zur Ansteuerung eines Hybridfahrzeugs bekannt, wobei der Anteil des elektromotorischen Antriebes sowohl unter Berücksichtigung des Batterieladezustandes als auch eines mittels eines Navigationssystems berechneten Höhenprofils gesteuert wird.

Aus der US 6 381 522 B1 ist ein Verfahren zur Steuerung eines Hybridfahrzeugs bekannt, bei dem auf Basis eines Höhenprofils und unter Berechnung einer Wahrscheinlichkeitsverteilung für das Erreichen von möglichen Streckenpunkten, wobei auch Verkehrsinformationen berücksichtigt werden, auch ohne Zieleingabe eine Routenplanung durchgeführt und davon abhängig der Betrieb eines Regenerativsystems und des Verbrennungsmotors gesteuert werden.

Aus der DE 100 35 027 A1 ist ein Verfahren zur Steuerung des Betriebsmodus von Fahrzeugen mit Hybridantrieben bekannt, wobei der Fahrleistungsbedarf durch Einbezug des in Form von Fahrwiderstandsparametern (wie Steigung, Streckenbelag, Gegenwind etc.) navigationsgestützt erfassten Streckenprofils abgeschätzt wird, um den Betriebsmodus zuverlässiger abzustimmen. Das Streckenprofil wird als zusätzlicher Parameter zu Kriterien wie Fahrdynamik, Fahrerverhalten und verfügbare elektrische Antriebsleistung herangezogen, und je nach Ergebnis wird ein verbrennungsmotorischer, elektromotorischer oder gemischter Antrieb gewählt.

Bei den zuvor genannten Verfahren erfolgt jedoch eine Berücksichtigung des Streckenprofils jeweils nur in spezifizierter bzw. nur für die jeweilige Anwendung nutzbarer Weise.

In der US 5521823 ist ein Verfahren zur Steuerung von Fahrzeugkomponenten bekannt, bei der das Verfahren aus vorangegangenen Fahrten ortsabhängige Fahrzustandsparameter ermittelt. Bei einer erneuten Fahrt auf der gleichen Strecke werden die Fahrzeugkomponenten mit diesen Fahrzustandsparametern bereits vorausschauend gesteuert. Falls keine ermittelten Fahrzustandsparameter vorliegen, werden generische Fahrzustandsparameter für bestimmte Fahrstrecken wie Autobahn oder Stadtverkehr zugrundegelegt. Diese Verfahren eignet sich vor allem für Fahrten auf immer gleichen Strecken, bei denen eine Vielzahl von ermittelten Fahrzustandsparametern ermittelt worden sind. Weniger geeignet ist dieses Verfahren jedoch, wenn neue Strecken befahren werden sollen, da hierfür nur die generischen Fahrzustandsparameter herangezogen werden können.

Eine Aufgabe der vorliegenden Erfindung besteht darin, ein Verfahren zur Erkennung bzw. Vorhersage von Fahrtsituationen bereitzustellen, welches eine flexiblere Nutzung der erhaltenen Information in unterschiedlichen Anwendungen ermöglicht und zur Steuerung des Betriebsmodus von unterschiedlichen Fahrzeugkomponenten einsetzbar ist.

Diese Aufgabe wird gemäß den Merkmalen der unabhängigen Patentansprüche 1 bzw. 10 gelöst.

Ein erfindungsgemäßes Verfahren zur Vorhersage von Fahrtsituationen weist folgende Schritte auf:
- Festlegen einer Mehrzahl von Standard-Fahrtsituationen, wobei jede Standard-Fahrtsituation durch eine Gruppe von Fahrzustandsparametern charakterisiert ist;
- Festlegen einer Mehrzahl von Streckenzustands-Parametern zur Beschreibung des Zustands einer Fahrtstrecke;
- Ermitteln einer Zuordnungsvorschrift, welche jeweils einer Gruppe von Werten der Streckenzustands-Parameter eine Standard-Fahrtsituation zuordnet;
- Ermitteln einer bevorstehenden Fahrtstrecke;
- Ermitteln von Werten der Streckenzustands-Parameter für die bevorstehende Fahrtstrecke; und
- Zuordnen der bevorstehenden Fahrtstrecke zu einer der Standard-Fahrtsituationen auf Basis der Zuordnungsvorschrift.

Dadurch, dass gemäß der Erfindung die jeweils bevorstehende Fahrtstrecke einer der zuvor definierten Standard-Fahrtsituationen zugeordnet wird, wird eine Evaluierung der bevorstehenden Fahrtstrecke in klar definierten Kategorien erreicht, wodurch eine flexible Verwertbarkeit dieser Auswertung für unterschiedliche Anwendungen gewährleistet wird. Insbesondere ist die Idee der Erfindung also dadurch gekennzeichnet, dass nicht nur eine definierte Abfrage eines bevorstehenden Streckenprofils durch eine bestimmte Anwendung erfolgt, sondern vielmehr eine standardisierte und in vorbestimmten Kategorien klassifizierte Analyse der bevorstehenden Fahrstrecke durchgeführt wird, so dass eine erheblich größere Flexibilität bezüglich der auf Basis dieser klassifizierten Analyse anschließend erfolgenden Steuerung des Betriebsmodus einer beliebigen Fahrzeugkomponente (Batterie, Partikelfilter etc.) erzielt wird. Dabei werden vorzugsweise die Schritte des Festlegens einer Mehrzahl von Standard-Fahrtsituationen, des Festlegens einer Mehrzahl von Streckenzustands-Parametern und des Ermittelns einer Zuordnungsvorschrift nur einmalig bei Programmierung des Fahrzeugs (oder zumindest vergleichsweise selten) ausgeführt, wohingegen die weiteren Schritte des Ermittelns einer bevorstehenden Fahrtstrecke, des Ermittelns von Werten der Streckenzustands-Parameter für die bevorstehende Fahrtstrecke und des Zuordnens der bevorstehenden Fahrtstrecke zu einer der Standard-Fahrtsituationen auf Basis der Zuordnungsvorschrift bei einer jeweils aktuellen Fahrt aufs Neue durchgeführt werden.

Ein erfindungsgemäßes Verfahren zur Erkennung von Fahrtsituationen weist folgende Schritte auf:
- Festlegen einer Mehrzahl von Standard-Fahrtsituationen, wobei jede Standard-Fahrtsituation durch eine Gruppe von Fahrzustandsparametern charakterisiert ist;
- Ermitteln der Werte von zumindest einem Teil der Fahrzustandsparameter für eine vor einer aktuellen Fahrtssituation zurückgelegte Fahrtstrecke;
- Vergleich der für die zurückgelegte Fahrtstrecke ermittelten Werte mit den Werten der Fahrzustandsparameter für die Standard-Fahrtsituationen; und
- Zuordnen der aktuellen Fahrtssituation zu einer der Standard-Fahrtsituationen auf Basis des Vergleichs.

Auch hier erfolgt somit erfindungsgemäß eine Zuordnung der aktuellen Fahrtssituation zu einer von zuvor definierten Standard-Fahrtsituationen, womit wiederum eine Evaluierung der aktuellen Fahrtsituation in klar definierten Kategorien erreicht und eine flexible Verwertbarkeit dieser Auswertung für unterschiedliche Anwendungen gewährleistet wird. Dabei wird vorzugsweise der erste Schritt des Festlegens einer Mehrzahl von Standard-Fahrtsituationen nur einmalig bei Programmierung des Fahrzeugs (oder zumindest vergleichsweise selten) ausgeführt, wohingegen die weiteren Schritte des Ermittelns der Werte von zumindest einem Teil der Fahrzustandsparameter für eine vor einer aktuellen Fahrtssituation zurückgelegten Fahrtstrecke, der Vergleich der für die zurückgelegte Fahrtstrecke ermittelten Werte mit den Werten der Fahrzustandsparameter für die Standard-Fahrtsituationen und das Zuordnen der aktuellen Fahrtssituation zu einer der Standard-Fahrtsituationen auf Basis des Vergleichs bei einer jeweils aktuellen Fahrt aufs Neue durchgeführt werden.

In einer bevorzugten Ausführungsform erfolgt jeweils auf Basis der (zu der bevorstehenden bzw. der zurückgelegten Fahrstrecke) zugeordneten Standard-Fahrtsituation ein Steuern des Betriebsmodus wenigstens einer Fahrzeugkomponente. Bei dieser Fahrzeugkomponente kann es sich insbesondere um die Fahrzeugbatterie (also Steuerung des Ladezyklus), einen Partikelfilter oder Dieselrussfilter (Steuerung der Filter-Regeneration) oder auch eine beliebige andere Fahrzeugkomponente, deren Betriebszustand in Abhängigkeit von der jeweiligen Fahrtsituation gesteuert werden soll, handeln.

Die Erfindung betrifft ferner eine Vorrichtung, welche zur Durchführung der o.g. Verfahren ausgebildet ist.

Weitere Ausgestaltungen der Erfindung sind der Beschreibung sowie den Unteransprüchen zu entnehmen.

Die Erfindung wird nachstehend anhand bevorzugter Ausführungsformen unter Bezugnahme auf die beigefügten Abbildungen erläutert. Es zeigen:
- Figur 1: ein Flussdiagramm zur Erläuterung des Ablaufs eines erfindungsgemäßen Verfahrens zur Vorhersage von Fahrtsituationen;
- Figur 2: ein Schaubild zur Veranschaulichung einer erfindungsgemäßen Aufteilung eines Bereichs einer in einem Navigationssystem gespeicherten Straßenkarte in einzelne Segmente mit unterschiedlichen Kombinationen von Werten von Streckenzustands-Parametern; und
- Figur 3: ein Flussdiagramm zur Erläuterung des Ablaufs eines erfindungsgemäßen Verfahrens zur Erkennung von Fahrtsituationen.

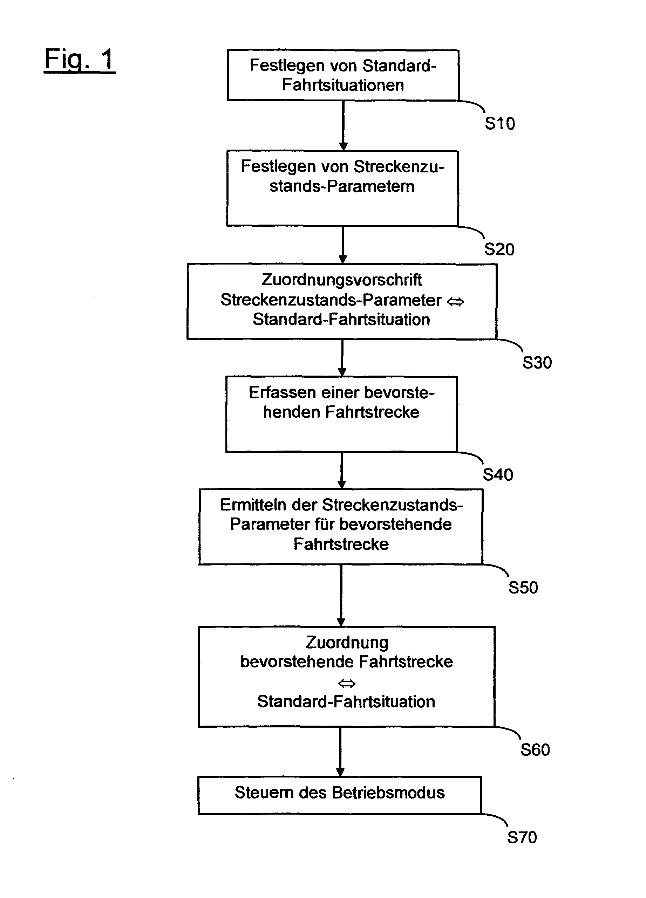

Bei einem erfindungsgemäßen Verfahren zur Vorhersage von Fahrtsituationen erfolgt gemäß Fig. 1 in einem ersten Schritt S10 eine statistische Auswertung einer Vielzahl von Fahrten auf unterschiedlichen Fahrtstrecken hinsichtlich der jeweils erreichten Werte der mittleren Gesamtgeschwindigkeit, der mittleren Reisegeschwindigkeit, der maximalen Geschwindigkeit, der Anhalte-Häufigkeit, des Leerlaufbetrieb-Anteils, des relativen Verzögerungsbetrieb-Anteils, des relativen Reisebetrieb-Anteils, des relativen Beschleunigungsbetrieb-Anteils und der mittleren positiven Beschleunigung, wobei diese Größen im Weiteren als Fahrzustandsparameter bezeichnet werden.

Mittels einer Gruppierungsprozedur ("Cluster-Prozedur") werden die erhaltenen Werte der Fahrzustandsparameter zu einzelnen Clustern derart zusammengefasst, dass die Nummer des jeweiligen Clusters mit im allgemeinen steigender Streckenlänge und mittlerer Gesamtgeschwindigkeit ansteigt. Ein typisches Ergebnis ist in Tabelle 1 gezeigt, wobei in den (in Tabelle 1 mit römischen Ziffern bezeichneten) Spalten 1 bis 10 für jeden Cluster die jeweils erhaltenen Mittelwerte der o.g. Fahrzustandsparameter sowie der jeweilige Mittelwert der Zeitdauer und der Streckenlänge angegeben sind. Die einzelnen Cluster 1 bis 10 werden im Weiteren als "Standard-Fahrtsituationen" bezeichnet, wobei die mit "I" bezeichnete erste Standard-Fahrtsituation eine Situation mit einem innerstädtischen oder innerhalb einer geschlossenen Ortschaft bestehenden Stauverkehr, die mit "II"-"IV" bezeichneten Standard-Fahrtsituationen jeweils Stadtverkehrsituationen (mit zunehmend flüssigerem Verkehrsfluss), die mit "V"-"VII" bezeichneten Standard-Fahrtsituationen (jeweils zunehmend flüssiger verlaufende) außerörtliche Verkehrssituationen z.B. auf Landstraßen und die mit "VIII"-"X" bezeichneten Standard-Fahrtsituationen Autobahnfahrten (mit zunehmend flüssigerem Verkehrsfluss) entsprechen.

**Tabelle 1:**

| | **I** | **II** | **III** | **IV** | **V** | **VI** | **VII** | **VIII** | **IX** | **X** |
|---|---|---|---|---|---|---|---|---|---|---|
| Fahrtdauer (min) | 7,48 | 5,74 | 5,30 | 7,77 | 10,52 | 13,57 | 18,27 | 29,07 | 46,15 | 112,62 |
| Streckenlänge (km) | 2,86 | 2,75 | 3,03 | 4,95 | 7,72 | 11,19 | 16,91 | 32,12 | 60,47 | 186,95 |
| Mittl. Gesamtgeschw. (km/h) | 21,96 | 27,64 | 33,30 | 36,97 | 43,06 | 49,04 | 55,47 | 66,60 | 79,51 | 100,19 |
| Mittlere Reisegeschw. (km/h) | 30,28 | 31,33 | 36,23 | 40,93 | 46,90 | 52,89 | 59,63 | 71,30 | 84,21 | 102,95 |
| maximale Geschw. (km/h) | 57,41 | 55,02 | 61,81 | 72,69 | 84,69 | 96,65 | 112,89 | 130,05 | 145,26 | 147,49 |
| Anhalte-Häufigkeit (1/km) | 3,23 | 2,05 | 1,36 | 1,19 | 0,82 | 0,61 | 0,47 | 0,31 | 0,21 | 0,08 |
| Leerlaufbetr. (%) | 27,82 | 11,94 | 8,27 | 9,97 | 8,48 | 7,56 | 7,19 | 6,78 | 5,85 | 2,81 |
| Verzögerungsbetr. (%) | 27,16 | 32,92 | 36,12 | 34,23 | 34,72 | 34,65 | 34,05 | 32,87 | 32,92 | 30,42 |
| Reisebetr. (%) | 16,48 | 21,40 | 18,88 | 20,15 | 20,07 | 20,58 | 21,85 | 24,69 | 25,46 | 34,12 |
| Beschleunig.-betr.(%) | 28,54 | 33,73 | 36,72 | 35,66 | 36,73 | 37,22 | 36,90 | 35,66 | 35,77 | 32,63 |
| mittlere pos. Beschl. (m/s²) | 0,84 | 0,79 | 0,82 | 0,80 | 0,76 | 0,72 | 0,70 | 0,64 | 0,59 | 0,49 |

Jeder der obigen Standard-Fahrtsituationen "I"-"X" kann nun eine zugehörige Häufigkeitsverteilung der Fahrgeschwindigkeitswerte und Beschleunigungswerte des Kraftfahrzeugs (Tabelle 2a,b) bzw. eine Häufigkeitsverteilung der Drehzahlwerte und Drehmomentwerte des Verbrennungsmotors des Kraftfahrzeugs (Tabelle 3a,b) zugeordnet werden, wofür vorzugsweise diejenigen Fahrten mit den für die jeweilige Standard-Fahrtsituationen bzw. den Cluster "I" bis "X" typischsten Werten der Fahrzustandsparameter herangezogen werden. Die so erhaltene Häufigkeitsverteilung der Fahrgeschwindigkeits- und Beschleunigungswerte ist in Tabelle 2a für das Cluster "I" und in Tabelle 2b für das Cluster "X" dargestellt.

**Tabelle 2a:**

| **Cluster I** | **Beschleunigung (m/s²)** | | | | | | | | | |
|---|---|---|---|---|---|---|---|---|---|---|
| **Geschw. (km/h)** | a≤-2 | -2<a ≤-1.4 | -1.4<a ≤-0.6 | -0.6<a ≤-0.2 | -0.2<a ≤0.2 | 0.2<a ≤0.6 | 0.6<a ≤1.4 | 1.4<a ≤2 | a >2 | |
| 0 | 0.2% | 0.3% | 1.1% | 0.3% | 27.8% | 0.0% | 0.0% | 0.0% | 0.0% | 29.7% |
| 1-10 | 0.4% | 0.4% | 1.5% | 2.1% | 1.7% | 1.3% | 1.4% | 0.4% | 0.3% | 9.5% |
| 11-20 | 0.4% | 0.5% | 1.7% | 2.6% | 1.7% | 2.2% | 1.6% | 0.5% | 0.5% | 11.8% |
| 21-30 | 0.3% | 0.4% | 1.7% | 3.3% | 2.5% | 3.4% | 2.3% | 0.5% | 0.2% | 14.6% |
| 31-40 | 0.1% | 0.3% | 1.4% | 3.7% | 2.8% | 3.8% | 1.8% | 0.4% | 0.1% | 14.4% |
| 41-60 | 0.0% | 0.1% | 1.0% | 5.3% | 5.6% | 6.0% | 1.6% | 0.2% | 0.1% | 19.9% |
| 61-80 | 0.0% | 0.0% | 0.0% | 0.0% | 0.1% | 0.1% | 0.0% | 0.0% | 0.0% | 0.2% |
| 81-100 | 0.0% | 0.0% | 0.0% | 0.0% | 0.0% | 0.0% | 0.0% | 0.0% | 0.0% | 0.0% |
| 101-120 | 0.0% | 0.0% | 0.0% | 0.0% | 0.0% | 0.0% | 0.0% | 0.0% | 0.0% | 0.0% |
| 121-140 | 0.0% | 0.0% | 0.0% | 0.0% | 0.0% | 0.0% | 0.0% | 0.0% | 0.0% | 0.0% |
| >140 | 0.0% | 0.0% | 0.0% | 0.0% | 0.0% | 0.0% | 0.0% | 0.0% | 0.0% | 0.0% |
| | 1.3% | 2.1% | 8.3% | 17.4% | 42.2% | 16.7% | 8.7% | 2.0% | 1.2% | 100.0% |

**Tabelle 2b:**

| **Cluster X** | **Beschleunigung (m/s²)** | | | | | | | | | |
|---|---|---|---|---|---|---|---|---|---|---|
| **Geschw. (km/h)** | a≤ -2 | -2<a ≤-1.4 | -1.4<a ≤-0.6 | -0.6<a ≤-0.2 | -0.2<a ≤0.2 | 0.2<a ≤0.6 | 0.6<a ≤1.4 | 1.4<a ≤2 | a >2 | |
| 0 | 0.0% | 0.0% | 0.1% | 0.0% | 2.5% | 0.0% | 0.0% | 0.0% | 0.0% | 2.7% |
| 1-10 | 0.0% | 0.0% | 0.1% | 0.3% | 0.2% | 0.1% | 0.1% | 0.0% | 0.0% | 1.0% |
| 11-20 | 0.0% | 0.1% | 0.2% | 0.3% | 0.2% | 0.2% | 0.2% | 0.1% | 0.1% | 1.3% |
| 21-30 | 0.0% | 0.1% | 0.2% | 0.3% | 0.2% | 0.3% | 0.2% | 0.1% | 0.0% | 1.4% |
| 31-40 | 0.0% | 0.1% | 0.2% | 0.4% | 0.3% | 0.4% | 0.3% | 0.1% | 0.0% | 1.7% |
| 41-60 | 0.1% | 0.1% | 0.5% | 1.1% | 0.8% | 1.2% | 0.6% | 0.1% | 0.0% | 4.5% |
| 61-80 | 0.1% | 0.1% | 0.5% | 1.6% | 1.5% | 1.7% | 0.6% | 0.1% | 0.0% | 6.2% |
| 81-100 | 0.0% | 0.1% | 0.8% | 3.5% | 3.8% | 3.9% | 0.8% | 0.0% | 0.0% | 12.9% |
| 101-120 | 0.0% | 0.0% | 0.8% | 9.8% | 15.2% | 10.6% | 0.6% | 0.0% | 0.0% | 37.1% |
| 121-140 | 0.0% | 0.0% | 0.7% | 7.8% | 9.2% | 8.5% | 0.7% | 0.0% | 0.0% | 27.0% |
| >140 | 0.0% | 0.0% | 0.1% | 1.2% | 1.3% | 1.5% | 0.2% | 0.0% | 0.0% | 4.3% |
| | 0.4% | 0.6% | 4.2% | 26.2% | 35.3% | 28.4% | 4.3% | 0.4% | 0.2% | 100.0% |

Aus Tabelle 2b ist beispielsweise erkennbar, dass 15.2% der Zeit, während der sich das Fahrzeug in der Fahrtsituation X befindet, die Kombination einer Geschwindigkeit zwischen 101 und 120 km/h in Verbindung mit einer Beschleunigung zwischen -0.2m/s² und +0.2m/s² zu erwarten ist.

Die erhaltene Häufigkeitsverteilung der Drehzahlwerte und Drehmomentwerte des Verbrennungsmotors ist in Tabelle 3a für das Cluster "I" und in Tabelle 3b für das Cluster "X" dargestellt.

**Tabelle 3a:**

| **Cluster I** | **Drehzahl (Umdrehungen pro Min.)** | | | | | | | |
|---|---|---|---|---|---|---|---|---|
| **Drehmoment (Nm)** | n ≤1000 | 1000<n ≤2000 | 2000<n ≤3000 | 3000<n ≤4000 | 4000<n ≤5000 | 5000<n ≤6000 | 6000<n ≤7000 | |
| T>130 | 0.0% | 0.2% | 0.2% | 0.1% | 0.0% | 0.0% | 0.0% | 0.4% |
| 105<T(130 | 0.1% | 1.5% | 0.7% | 0.1% | 0.0% | 0.0% | 0.0% | 2.3% |
| 90<T≤105 | 0.1% | 1.4% | 0.7% | 0.0% | 0.0% | 0.0% | 0.0% | 2.2% |
| 75<T(90 | 0.1% | 1.9% | 0.9% | 0.1% | 0.0% | 0.0% | 0.0% | 2.9% |
| 60<T(75 | 0.1% | 2.7% | 1.3% | 0.1% | 0.0% | 0.0% | 0.0% | 4.3% |
| 45<T(60 | 0.2% | 4.7% | 1.6% | 0.1% | 0.0% | 0.0% | 0.0% | 6.6% |
| 30<T(45 | 2.0% | 6.7% | 2.7% | 0.2% | 0.0% | 0.0% | 0.0% | 11.7% |
| 15<T≤30 | 5.3% | 11.0% | 3.6% | 0.1% | 0.0% | 0.0% | 0.0% | 20.1% |
| 0<T≤15 | 21.7% | 13.2% | 4.3% | 0.1% | 0.0% | 0.0% | 0.0% | 39.3% |
| T≤0 | 0.0% | 7.0% | 3.2% | 0.1% | 0.0% | 0.0% | 0.0% | 10.3% |
| | 29.5% | 50.4% | 19.2% | 1.0% | 0.0% | 0.0% | 0.0% | 100% |

**Tabelle 3b:**

| **Cluster X** | **Drehzahl (Umdrehungen pro Min.)** | | | | | | | |
|---|---|---|---|---|---|---|---|---|
| **Drehmoment (Nm)** | n ≤1000 | 1000<n ≤2000 | 2000<n ≤3000 | 3000<n ≤4000 | 4000<n ≤5000 | 5000<n ≤6000 | 6000<n ≤7000 | |
| T>130 | 0.0% | 0.1% | 0.8% | 0.9% | 0.1% | 0.0% | 0.0% | 1.9% |
| 105<T≤130 | 0.0% | 0.2% | 2.7% | 4.3% | 0.1% | 0.0% | 0.0% | 7.4% |
| 90<T≤105 | 0.0% | 0.2% | 4.0% | 5.3% | 0.1% | 0.0% | 0.0% | 9.7% |
| 75<T≤90 | 0.0% | 0.4% | 6.2% | 6.4% | 0.1% | 0.0% | 0.0% | 13.1% |
| 60<T≤75 | 0.0% | 0.4% | 8.7% | 7.8% | 0.1% | 0.0% | 0.0% | 17.0% |
| 45<T≤60 | 0.0% | 0.5% | 7.5% | 6.1% | 0.1% | 0.0% | 0.0% | 14.3% |
| 30<T≤45 | 0.1% | 0.8% | 5.7% | 4.3% | 0.1% | 0.0% | 0.0% | 10.9% |
| 15<T≤30 | 0.7% | 1.6% | 4.1% | 2.8% | 0.0% | 0.0% | 0.0% | 9.2% |
| 0<T≤15 | 2.6% | 2.4% | 3.4% | 1.6% | 0.0% | 0.0% | 0.0% | 10.0% |
| T≤0 | 0.0% | 1.5% | 4.0% | 1.1% | 0.0% | 0.0% | 0.0% | 6.7% |
| | 3.4% | 8.2% | 47.1% | 40.7% | 0.7% | 0.0% | 0.0% | 100.0% |

Vorzugsweise werden die in Tabelle 2 und 3 zusammengefassten Daten lediglich bei der Entwicklung der entsprechenden Anwendung berücksichtigt, ohne daß sie bei der Implementierung gespeichert werden müssen. Dies reduziert die Kommunikation erheblich, da lediglich die Clusternummern kommuniziert werden müssen. Die Daten können gegebenenfalls jedoch auch von der jeweiligen Anwendung gespeichert und vor Verwendung dynamisch aktualisiert werden.

In einem nächsten Schritt S20 werden nun geeignete Streckenzustands-Parameter zur Beschreibung des Zustands eines beliebigen Streckenabschnitts bestimmt. Bei den Streckenzustands-Parametern kann es sich beispielsweise um die Streckenlänge, Geschwindigkeitsbegrenzung, Fahrspuranzahl, Verkehrsampelanzahl oder eine Kennzahl für das Vorhandensein einer Verkehrsampel am Ende des Streckenabschnitts handeln.

Im nächsten Schritt S30 wird nun eine Zuordnungsvorschrift ermittelt, welche jeweils einer Gruppe von Werten der Streckenzustands-Parameter eine Standard-Fahrtsituation zuordnet. Dies erfolgt vorzugsweise so, dass auf Basis der statistisch ausgewerteten Fahrten auf unterschiedlichen Einzel-Fahrtstrecken die Wahrscheinlichkeitsverteilung für bestimmte Kombinationen von Werten der Streckenzustands-Parameter ermittelt und jeder Kombinationen von Werten der Streckenzustands-Parameter die Standard-Fahrtsituation mit der größten Wahrscheinlichkeit zugeordnet wird. Eine beispielhafte Zuordnungsvorschrift ist in Tabelle 4 gezeigt:

**Tabelle 4:**

| Regel | Geschwindigkeitsbegrenzung (km/h) | Straßenfunktionsklasse | Fahrspuranzahl | Ampel am Ende des Abschnittes? | Standard-Fahrtsituation |
|---|---|---|---|---|---|
| 1 | 30 | 0 | 1 | ja | 1 |
| 2 | 30 | 1 | 1 | nein | 3 |
| 3 | 50 | 0 | 1 | ja | 1 |
| 4 | 50 | 1 | 1 | nein | 3 |
| 5 | 50 | 2 | 1 | nein | 1 |
| 6 | 50 | 3 | 1 | ja | 1 |
| 7 | 50 | 3 | 2 | ja | 3 |
| 8 | 70 | 3 | 2 | ja | 6 |
| 9 | 100 | 3 | 2 | nein | 7 |
| 10 | - | 3 | 1 | nein | 6 |
| 11 | - | 4 | 2 | nein | 10 |

Bei der Definition dieser Regeln müssen entweder alle möglichen Attributkombinationen abgedeckt sein oder es muß eine geeignete Priorisierung definiert werden.

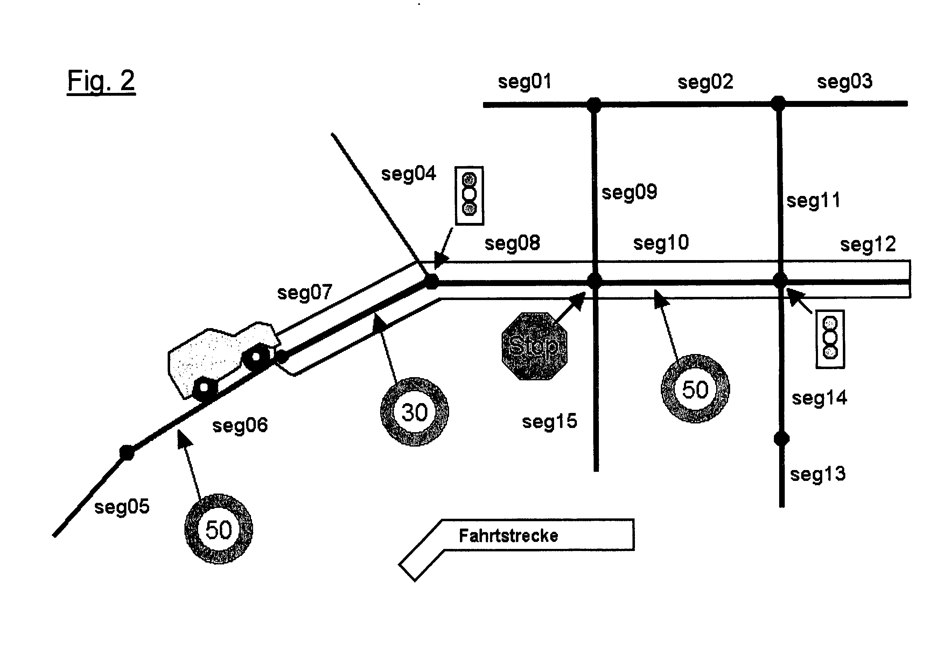

Im nächsten Schritt S40 wird nun, vorzugsweise mittels eines Navigationssystems, eine bevorstehende Fahrtstrecke ermittelt. Vorzugsweise wird die ermittelte bevorstehende Fahrtstrecke vor der weiteren Auswertung zunächst in geeignete Streckenabschnitte unterteilt, wobei jeder Streckenabschnitt durch eine Gruppe von Werten der Streckenzustands-Parameter gekennzeichnet ist. Zur Veranschaulichung einer solchen Unterteilung ist in Fig. 2 anhand eines Schaubildes lediglich schematisch dargestellt, wie eine im Navigationssystem in digitaler Form gespeicherte Straßenkarte in einzelne, mit "seg01" bis "seg15" beschriftete Segmente zerlegbar ist, wobei diese Segmente seg01 - seg15 durch jeweils eingezeichnete Knotenpunkte voneinander getrennt sind und wobei in den einzelnen Segmenten seg01 - seg15 unterschiedliche Kombinationen von Werten der Streckenzustands-Parameter (z.B. Geschwindigkeitsbegrenzung, Fahrspuranzahl etc) vorliegen. Beispielsweise sind dem Segment "seg06" die folgenden Streckenzustands-Parameter "Geschwindigkeitsbegrenzung = 50, Fahrspuranzahl = 1, Verkehrsampel am Ende des Streckenabschnitts = Nein" zugeordnet, wohingegen dem Segment seg07 die folgenden Streckenzustands-Parameter "Geschwindigkeitsbegrenzung = 30, Fahrspuranzahl = 1, Verkehrsampel am Ende des Streckenabschnitts = Ja", zugeordnet sind, etc.

Gemäß einer bevorzugten Ausführungsform wird im Schritt S40 nicht nur eine einzige bevorstehende Fahrtstrecke ermittelt, sondern es werden auch eine oder mehrere Alternativrouten berücksichtigt (z.B. solche Routen, die nach den Auswahlkriterien des Navigationssystems nahezu gleichwertig sind oder potentielle Umleitungsrouten bei Verkehrsstaus). Es kann dann insbesondere ein Wahrscheinlichkeitswert dafür angesetzt werden, dass der Fahrer die Alternativroute wählt; ein solcher Wahrscheinlichkeitswert kann z.B. aus dem Verhältnis der "Routenbewertungen" durch das Navigationssystem berechnet werden, wobei gegebenenfalls auch vom Fahrer bevorzugte Routen aus früheren Fahrten herangezogen und berücksichtigt werden können .

In einem weiteren Schritt S50 werden die Werte der jeweiligen Streckenzustands-Parameter für die im Schritt S40 ermittelte(n) bevorstehende(n) Fahrtstrecke(n) den einzelnen Streckenabschnitten zugeordnet, wie beispielhaft in Tab. 5 gezeigt:

**Tabelle 5:**

| Streckenabschnitt | Länge (m) | Straßen-Funktionsklasse (0...4) | Geschwindig keitsbegrenzung (km/h) | Fahrspuranzahl | Verkehrsampel am Ende des Streckenabschnitts vorhanden? |
|---|---|---|---|---|---|
| 1 | 500 | 1 | 50 | 1 | Ja |
| 2 | 410 | 1 | 70 | 2 | Nein |
| 3 | 30 | 3 | 90 | 2 | Nein |
| ... | | | | | |

Im nächsten Schritt S60 werden nun die einzelnen Streckenabschnitte der bevorstehenden Fahrtstrecke gemäß der (entsprechend Tabelle 5) erhaltenen Werte der Streckenzustands-Parameter jeweils auf Basis der Zuordnungsvorschrift (entsprechend Tabelle 4) einer der Standard-Fahrtsituationen (entsprechend Tabelle 1) zugeordnet, so dass sich im Ergebnis der Analyse eine lückenlose Sequenz von Standard-Fahrtsituationen für die gesamte bevorstehende Fahrstrecke ergibt.

Sofern, wie im Zusammenhang mit Schritt S40 ausgeführt wurde, bei der Ermittlung der bevorstehenden Fahrtstrecke auch eine oder mehrere Alternativrouten berücksichtigt und für diese jeweils ein Wahrscheinlichkeitswert für das Wählen dieser Alternativroute durch den Fahrer angesetzt wurde, können bei der im Schritt S60 erfolgenden Zuordnung die Klassifizierung der Ausweichroute(n) und die der optimalen Route mit der jeweiligen Wahrscheinlichkeit gewichtet werden, so dass auch Zwischenwerte zwischen einzelnen Klassifikationen bzw. Standard-Fahrtsituationen entstehen können.

Auf Basis der in Schritt S60 erfolgten Zuordnung der bevorstehenden Fahrtstrecke zu einer der Standard-Klassifikationen bzw. Standard-Fahrtsituationen bzw. etwaigen Zwischenwerten zwischen solchen Klassifikationen kann dann im Schritt S70 die Steuerung des Betriebsmodus einer beliebigen Fahrzeugkomponente erfolgen.

Vorzugsweise werden ferner aufeinander folgende Streckenabschnitte mit gleicher Standard-Fahrtsituation zu einem gemeinsamen Abschnitt zusammengefasst, wodurch sich eine Reduzierung der für die jeweilige Anwendung bereitzustellenden Datenmenge erreichen lässt. Die generierten Informationen lassen sich ferner durch die Bildung gewichteter Mittel bei Bedarf weiter verdichten, etwa zur Bestimmung der erwarteten Durchschnittsgeschwindigkeit oder Leerlaufrate für die gesamte Strecke.

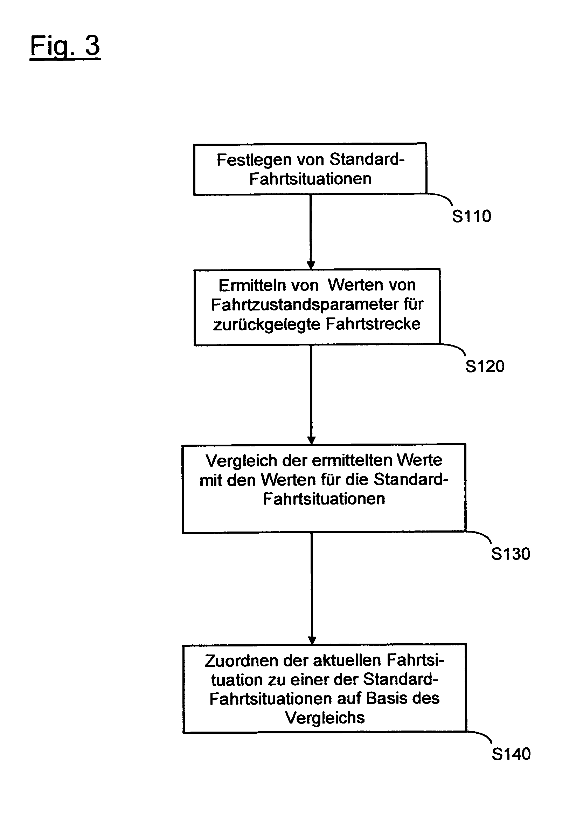

Bei einem Verfahren zur Erkennung von Fahrtsituationen erfolgt gemäß Fig. 3 in einem ersten Schritt S110 eine statistische Auswertung einer Vielzahl von Einzel-Fahrten auf unterschiedlichen Fahrtstrecken zur Festlegung von Standard-Fahrtsituationen. Dieser Schritt entspricht dem ersten Schritt des in Fig. 1 dargestellten, oben beschriebenen Verfahrens, so dass auf eine detaillierte Erläuterung hier verzichtet werden kann.

In einem nächsten Schritt S120 werden die Werte von zumindest einem Teil der Fahrzustandsparameter, deren Werte auch die Standard-Fahrtsituationen charakterisieren (vgl. Tabelle 1), für eine unmittelbar vor einer aktuellen Fahrtsituation zurückgelegten Fahrtstrecke bestimmt. Gemäß einem Ausführungsbeispiel können etwa für die zuletzt von dem Fahrzeug zurückgelegten 500 m die jeweiligen Werte der mittleren Gesamtgeschwindigkeit, der mittleren Reisegeschwindigkeit, der maximalen Geschwindigkeit, der Anhalte-Häufigkeit, des Leerlaufbetrieb-Anteils, des relativen Verzögerungsbetrieb-Anteils, des relativen Reisebetrieb-Anteils, des relativen Beschleunigungsbetrieb-Anteils und der mittleren positiven Beschleunigung bestimmt werden.

Im nächsten Schritt S130 werden die ermittelten Werte der Fahrzustandsparameter (d.h. im obigen Beispiel der 9-dimensionale Vektor aus den Fahrzustandsparametern) für die zurückgelegte Fahrtstrecke mit den jeweiligen Werten (bzw. dem entsprechenden 9-dimensionalen Vektor) für die Standard-Fahrtsituationen (vgl. Tabelle 1) verglichen.

Auf Basis dieses Vergleichs wird sodann im Schritt S140 diejenige Standard-Fahrtsituation der aktuellen Fahrtsituation zugeordnet, welche die größte Übereinstimmung mit einer geeigneten Norm bei dem obigen Vektorvergleich ergibt. Auf diese Weise wird durch die Erfindung also ein "On-Line"-Verfahren zur Erkennung von Fahrtsituationen geschaffen, bei dem wiederum die Evaluierung der Fahrtsituation in definierten Kategorien bzw. Standard-Fahrtsituationen so erfolgt, dass die erhaltene Information für unterschiedliche Anwendungen, z.B. zur Steuerung eines Batterieaufladezyklus oder auch eines Partikelfilterregenerationszyklus, einsetzbar ist.

Ferner kann die Erkennung von Fahrsituationen während der Fahrt genutzt werden, um die Fehlvorhersagen zu korrigieren, beispielsweise im Falle eines Staus auf der Autobahn, wo die Informationen aus der Landkarte nicht zur aktuellen Verkehrslage passen. Auch eine adaptive Anpassung des in Schritt S30 ermittelten Zuordnungsvorschriften an die konkrete Situation eines Fahrzeuges ist somit möglich.

## Patentansprüche

1. Verfahren zur Vorhersage von Fahrtsituationen, **dadurch gekennzeichnet, dass** das Verfahren folgende Schritte aufweist:
Festlegen einer Mehrzahl von Standard-Fahrtsituationen (S10), wobei jede Standard-Fahrtsituation durch eine Gruppe von Fahrzustandsparametern charakterisiert ist;
Festlegen einer Mehrzahl von Streckenzustands-Parametern (S20) zur Beschreibung des Zustands einer Fahrtstrecke;
Ermitteln einer Zuordnungsvorschrift (S30), welche jeweils einer Gruppe von Werten der Streckenzustands-Parameter eine Standard-Fahrtsituation zuordnet;
Ermitteln einer bevorstehenden Fahrtstrecke (S40);
Unterteilen der ermittelten bevorstehenden Fahrtstrecke in Streckenabschnitte (S50), wobei jeder Streckenabschnitt durch eine Gruppe von Werten der Streckenzustands-Parameter **gekennzeichnet** ist; und
Zuordnen dieser Streckenabschnitte zu jeweils einer der Standard-Fahrtsituationen auf Basis der Zuordnungsvorschrift (S60),
**dadurch gekennzeichnet, dass**
die Zuordnungsvorschrift ermittelt wird, indem auf Basis statistisch ausgewerteter Fahrten auf unterschiedlichen Einzel-Fahrtstrecken die Wahrscheinlichkeitsverteilung für bestimmte Kombinationen von Werten der Streckenzustands-Parameter ermittelt und jeder Kombination von Werten der Streckenzustands-Parameter die Standard-Fahrtsituation mit der größten Wahrscheinlichkeit zugeordnet wird.

2. Verfahren nach Anspruch 1, **dadurch gekennzeichnet, dass** dieses ferner den Schritt aufweist: Steuern des Betriebsmodus von wenigstens einer Fahrzeugkomponente auf Basis der zugeordneten Standard-Fahrtsituation.

3. Verfahren nach Anspruch 1 oder 2, **dadurch gekennzeichnet, dass** eine adaptive Anpassung der ermittelten Zuordnungsvorschrift an die konkrete Situation des Fahrzeuges vorgenommen wird.

4. Verfahren nach einem der Ansprüche 1 bis 3, **dadurch gekennzeichnet, dass** das Erfassen der bevorstehenden Fahrtstrecke navigationsgestützt erfolgt.

5. Verfahren nach einem der Ansprüche 1 bis 4, **dadurch gekennzeichnet, dass** jeder Standard-Fahrtsituation eine Häufigkeitsverteilung der Fahrgeschwindigkeitswerte und der zugehörigen Beschleunigungswerte und/oder der Drehzahlwerte und der zugehörigen Drehmomentwerte des Kraftfahrzeugs zugeordnet wird.

6. Verfahren nach einem der Ansprüche 1 bis 5, **dadurch gekennzeichnet, dass** das Festlegen einer Mehrzahl von Standard-Fahrtsituationen durch statistische Auswertung einer Vielzahl von zuvor auf unterschiedlichen Fahrtstrecken durchgeführten Einzelfahrten erfolgt.

7. Verfahren nach einem der Ansprüche 1 bis 6, **dadurch gekennzeichnet, dass** die Mehrzahl von Fahrzustandsparametern aus der Gruppe der Größen mittlere Gesamtgeschwindigkeit, mittlere Reisegeschwindigkeit, maximale Geschwindigkeit, Anhalte-Häufigkeit, Leerlaufbetrieb-Anteil, relativer Verzögerungsbetrieb-Anteil, relativer Reisebetrieb-Anteil, relativer Beschleunigungsbetrieb-Anteil und mittlere positive Beschleunigung gewählt sind.

8. Verfahren nach einem der Ansprüche 1 bis 7, **dadurch gekennzeichnet, dass** die Mehrzahl von Streckenzustands-Parametern zumindest einige der folgenden Größen Streckenlänge, Geschwindigkeitsbegrenzung, Fahrspuranzahl und Verkehrsampelanzahl umfasst.

9. Verfahren nach einem der Ansprüche 2 bis 8, **dadurch gekennzeichnet, dass** im Schritt des Steuerns des Betriebsmodus wenigstens einer Fahrzeugkomponente auf Basis der zugeordneten Standard-Fahrtsituation eine oder mehrere der Fahrzeugkomponenten Fahrzeugbatterie, Partikelfilter und Dieselrussfilter gesteuert wird.

10. Vorrichtung zur Vorhersage von Fahrtsituationen, **dadurch gekennzeichnet, dass** diese zur Durchführung folgender Schritte ausgelegt ist:
Festlegen einer Mehrzahl von Standard-Fahrtsituationen (S10), wobei jede Standard-Fahrtsituation durch eine Gruppe von Fahrzustandsparametern charakterisiert ist;
Festlegen einer Mehrzahl von Streckenzustands-Parametern (S20) zur Beschreibung des Zustands einer Fahrtstrecke;
Ermitteln einer Zuordnungsvorschrift (S30), welche jeweils einer Gruppe von Werten der Streckenzustands-Parameter eine Standard-Fahrtsituation zuordnet;
Ermitteln einer bevorstehenden Fahrtstrecke (S40);
Unterteilen der ermittelten bevorstehenden Fahrtstrecke in Streckenabschnitte (S50), wobei jeder Streckenabschnitt durch eine Gruppe von Werten der Streckenzustands-Parameter **gekennzeichnet** ist; und
Zuordnen dieser Streckenabschnitte zu jeweils einer der Standard-Fahrtsituationen auf Basis der Zuordnungsvorschrift (S60),
**dadurch gekennzeichnet, dass**
die Zuordnungsvorschrift ermittelt wird, indem auf Basis statistisch ausgewerteter Fahrten auf unterschiedlichen Einzel-Fahrtstrecken die Wahrscheinlichkeitsverteilung für bestimmte Kombinationen von Werten der Streckenzustands-Parameter ermittelt und jeder Kombination von Werten der Streckenzustands-Parameter die Standard-Fahrtsituation mit der größten Wahrscheinlichkeit zugeordnet wird.

## Claims

1. Method for prediction of driving situations, **characterized in that** the method has the following steps:
definition of a plurality of standard driving situations (S10), wherein each standard driving situation is **characterized by** a group of driving state parameters;
definition of a plurality of route state parameters (S20) in order to describe the state of a driving route;
determination of an association rule (S30), which in each case associates a standard driving situation with a group of values of the route state parameters;
determination of a driving route (S40) to be driven on;
subdivision of the determined driving route to be driven on into route sections (S50), wherein each route section is **characterized by** a group of values of the route state parameters; and
association of these route sections with in each case one of the standard driving situations on the basis of the association rule (S60),
**characterized in that**
the association will be determined by determining the probability distribution for specific combinations of values of the route state parameters on the basis of statistically evaluated journeys on different individual driving routes, and the standard driving situation with the highest probability is associated with each combination of values of the route state parameters.

2. Method according to Claim 1, **characterized in that** this method furthermore has the following step: control of the operating mode of at least one vehicle component on the basis of the associated standard driving situation.

3. Method according to Claim 1 or 2, **characterized in that** the determined association rule is adaptively matched to the specific situation of the vehicle.

4. Method according to one of Claims 1 to 3, **characterized in that** the recording of the driving route to be driven on is navigation-assisted.

5. Method according to one of Claims 1 to 4, **characterized in that** each standard driving situation is associated with a frequency distribution of the driving speed values and the associated acceleration values and/or the rotation speed values and the associated torque values of the motor vehicle.

6. Method according to one of Claims 1 to 5, **characterized in that** a plurality of standard driving situations are defined by statistical evaluation of a multiplicity of individual journeys which have previously been carried out on different driving routes.

7. Method according to one of Claims 1 to 6, **characterized in that** the plurality of driving state parameters are selected from the group of variables comprising mean overall speed, mean cruise speed, maximum speed, stopping frequency, idling operation component, relative deceleration operation component, relative cruise operation component, relative acceleration operation component and mean positive acceleration.

8. Method according to one of Claims 1 to 7, **characterized in that** the plurality of route state parameters comprise at least some of the following variables: route length, speed limit, number of lanes and number of traffic lights.

9. Method according to one of Claims 2 to 8, **characterized in that,** in the step of controlling the operating mode of at least one vehicle component on the basis of the associated standard driving situation, one or more of the vehicle components vehicle battery, particle filter and diesel soot filter is or are controlled.

10. Apparatus for prediction of driving situations, **characterized in that** this apparatus is designed to carry out the following steps:
definition of a plurality of standard driving situations (S10), wherein each standard driving situation is **characterized by** a group of driving state parameters;
definition of a plurality of route state parameters (S20) in order to describe the state of a driving route;
determination of an association rule (S30), which in each case associates a standard driving situation with a group of values of the route state parameters;
determination of a driving route (S40) to be driven on;
subdivision of the determined driving route to be driven on into route sections (S50), wherein each route section is **characterized by** a group of values of the route state parameters; and
association of these route sections with in each case one of the standard driving situations on the basis of the association rule (S60),
**characterized in that**
the association will be determined by determining the probability distribution for specific combinations of values of the route state parameters on the basis of statistically evaluated journeys on different individual driving routes, and the standard driving situation with the highest probability is associated with each combination of values of the route state parameters.

## Revendications

1. Procédé pour prédire des situations de conduite, **caractérisé en ce que** le procédé présente les étapes suivantes :
établissement d'une pluralité de situations de conduite standard (S10), chaque situation de conduite standard étant **caractérisée par** un groupe de paramètres d'état de conduite ;
établissement d'une pluralité de paramètres d'état de la chaussée (S20) pour décrire l'état d'une chaussée ;
détermination d'une prescription d'affectation (S30) qui affecte une situation de conduite standard à chaque fois à un groupe de valeurs des paramètres d'état de la chaussée ;
détermination d'une chaussée en avant (S40) ;
division de la chaussée en avant déterminée, en portions de chaussée (S50), chaque portion de chaussée étant **caractérisée par** un groupe de valeurs des paramètres d'état de la chaussée ; et
affectation de ces portions de chaussée à chaque fois à l'une des situations de conduite standard sur la base de la prescription d'affectation (S60),
et **caractérisé en ce que**
la prescription d'affectation est déterminée en déterminant sur la base de conduites sur différentes chaussées individuelles, analysées de manière statistique, la distribution de probabilité pour des combinaisons définies de valeurs des paramètres d'état de la chaussée, et en affectant à chaque combinaison de valeurs des paramètres d'état de la chaussée la situation de conduite standard ayant la plus grande probabilité.

2. Procédé selon la revendication 1, **caractérisé en ce que** celui-ci présente en outre l'étape consistant à commander le mode de fonctionnement d'au moins un composant du véhicule sur la base de la situation de conduite standard associée.

3. Procédé selon la revendication 1 ou 2, **caractérisé en ce que** l'on effectue une adaptation adaptative de la prescription d'affectation déterminée à la situation concrète du véhicule.

4. Procédé selon l'une quelconque des revendications 1 à 3, **caractérisé en ce que** la détection de la chaussée en avant s'effectue avec une aide à la navigation.

5. Procédé selon l'une quelconque des revendications 1 à 4, **caractérisé en ce que** l'on affecte à chaque situation de conduite standard une distribution de probabilité des valeurs de vitesse de conduite et des valeurs d'accélération associées et/ou des valeurs de régime et des valeurs de couple associées du véhicule automobile.

6. Procédé selon l'une quelconque des revendications 1 à 5, **caractérisé en ce que** l'établissement d'une pluralité de situations de conduite standard s'effectue par analyse statistique d'une pluralité de conduites individuelles réalisées précédemment sur différentes chaussées.

7. Procédé selon l'une quelconque des revendications 1 à 6, **caractérisé en ce que** la pluralité de paramètres d'état de conduite est choisie parmi le groupe de valeurs suivantes : la vitesse totale moyenne, la vitesse de croisière moyenne, la vitesse maximale, la fréquence des arrêts, la proportion de marche à vide, la proportion de mode de ralentissement relatif, la proportion de mode de croisière relatif, la proportion de mode d'accélération relatif, et l'accélération positive moyenne.

8. Procédé selon l'une quelconque des revendications 1 à 7, **caractérisé en ce que** la pluralité de paramètres d'état de la chaussée comprend au moins certaines des valeurs suivantes : la longueur de la chaussée, la limitation de vitesse, le nombre de voies et le nombre de feux de circulation.

9. Procédé selon l'une quelconque des revendications 2 à 8, **caractérisé en ce que** dans l'étape de commande du mode de fonctionnement d'au moins un composant du véhicule sur la base de la situation de conduite standard associée, un ou plusieurs des composants suivants sont commandés : la batterie du véhicule, le filtre à particules et le filtre à suie diesel.

10. Dispositif pour prédire des situations de conduite, **caractérisé en ce qu'**il est conçu pour mettre en oeuvre les étapes suivantes :
établissement d'une pluralité de situations de conduite standard (S10), chaque situation de conduite standard étant **caractérisée par** un groupe de paramètres d'état de conduite ;
établissement d'une pluralité de paramètres d'état de la chaussée (S20) pour décrire l'état d'une chaussée ;
détermination d'une prescription d'affectation (S30) qui affecte une situation de conduite standard à chaque fois à un groupe de valeurs des paramètres d'état de la chaussée ;
détermination d'une chaussée en avant (S40) ;
division de la chaussée en avant déterminée, en portions de chaussée (S50), chaque portion de chaussée étant **caractérisée par** un groupe de valeurs des paramètres d'état de la chaussée ; et
affectation de ces portions de chaussée à chaque fois à l'une des situations de conduite standard sur la base de la prescription d'affectation (S60),
et **caractérisé en ce que**
la prescription d'affectation est déterminée en déterminant sur la base de conduites sur différentes chaussées individuelles, analysées de manière statistique, la distribution de probabilité pour des combinaisons définies de valeurs des paramètres d'état de la chaussée, et en affectant à chaque combinaison de valeurs des paramètres d'état de la chaussée la situation de conduite standard ayant la plus grande probabilité.
